# EUROPEAN PATENT SPECIFICATION

(11) **EP 1 357 059 B1**
(45) Date of publication and mention of the grant of the patent: **07.11.2012**
(21) Application number: 02017460.3
(22) Date of filing: 05.08.2002
(51) Int. Cl.: B65D 85/04, B23K 9/133, B65H 49/08, B65H 57/12, B65D 19/20

(54) **Device for connecting to a welding wire coil container a sheath for feeding the wire to a welding machine**
Vorrichtung zum Anschließen einer Kabelführung an einen Behälter für einen Schweißdrahtbund zum Zuführen des Drahtes zu einer Schweißmaschine
Dispositif pour connecter une gaine avec un récipient pour une bobine de fil à souder pour alimenter une machine à souder avec le fil

(30) Priority: 24.04.2002 IT MI20020898
(43) Date of publication of application: 29.10.2003
(73) Proprietor: ISAF S.p.A., 38089 Storo (IT)
(72) Inventor: Rossi, Luigi, 37010 Rivoli Veronese (IT)
(74) Representative: Pittis, Olivier

(56) References cited:
- EP-A- 1 295 813
- DE-A- 1 614 059
- DE-C- 704 060
- US-A- 5 277 314
- US-A- 5 692 700
- US-A- 5 819 934
- PATENT ABSTRACTS OF JAPAN vol. 1999, no. 01, 29 January 1999 (1999-01-29) -& JP 10 264938 A (TOHO DENKI KK), 6 October 1998 (1998-10-06)
- PATENT ABSTRACTS OF JAPAN vol. 1997, no. 07, 31 July 1997 (1997-07-31) -& JP 09 057443 A (TOOKIN:KK), 4 March 1997 (1997-03-04)

## Description

The present invention relates to a device for connecting to a container containing a coil of welding wire the near end of a sheath for feeding the wire to a welding machine.

A connection device is known from US-A-5 277 314.

Known containers of the said type are of various shapes. Traditional containers are cylindrical and are closed upperly by a circular lid which has to be removed to extract therefrom the end of the metal wire coil, to enable this end to be inserted into a sheath which feeds the wire to the welding machine. The near end of this sheath is connected to the top of a conical adapter (known as a hood) which is disposed directly on the cylindrical container (after removing the lid). EP-B-O 636 098 describes a container of the aforesaid type in the shape of a square based prism, formed of cardboard. The container base can be reinforced by fixing to it a wooden pallet which facilitates its handling. To gain access to the container interior, it is provided at its upper face with the usual four flaps formed in opposing pairs in the punched blank and foldable outwards. The flaps are retained in their closed position by normal adhesive tape. MI2001A 001694, of the same applicant as the present application, describes another container of this type, comprising however two concentric shells, namely an outer and an inner, the wire coil being disposed in this latter. The two shells are of punchable material (in particular cardboard). The outer shell is in the form of a square based parallelepiped, whereas the inner shell, which has no ends, is cylindrical and is enveloped by the outer shell. The upper face of the outer shell again consists of four flaps in opposing pairs, which on being folded outwards allows access to the container interior (as stated, the inner cylindrical container is without ends).

In all the aforedescribed containers a sheath and a hood are used to enable the wire to reach the relative welding machine. The hood (preferably of perspex) has a base shaped to adapt to the top of the container (if the top of the container is provided with foldable flaps, these have to be completely folded over outwards previously). Consequently, to arrange known containers for delivery of the wire of the coil contained in them to a welding machine, the following has to be done:
the container has to be opened by cutting the adhesive tape that maintains the flaps of the container upper face in their closed position;
the flaps have to be completely folded over so that they lie adjacent to the container side walls;
the end of the wire coil inside the container has to be released;
the end of the wire coil has to be inserted through the appropriate hood, which is then placed on the container;
the wire has to be inserted through the sheath for its feed to the welding machine.

The object of the present invention is to provide device for connecting to a container containing a coil of welding wire the near end of a sheath such that the container can be arranged for wire delivery to the welding machine in a much shorter time and more easily than in the case of known containers of this type.

This object is attained by a device for connecting to a container containing a coil of welding wire the near end of a sheath as defined in claim 1 or claim 4.

The end of the wire of the coil already emerges from the container via a suitable through hole provided in the container, and is removably fixed to the container outer surface, there being applied or applicable to the container in correspondence with the hole the device for connecting to the container the near end of the sheath intended to receive the wire and feed it to the welding machine.

Such a container does not need to be opened, does not require the use of any hood and enables the operations involved in arranging for the wire feed to the welding machine to be significantly accelerated by the use of a suitable device and relative sheath.

The aforesaid device for connecting the sheath to the container is preferably not already applied to this latter, there being however provided about said through hole a container region which can be removed, the said connection device being of the type applicable to the container from the outside via the aperture resulting from the removal of said removable region.

The invention will be more apparent from the following description of one embodiment thereof. In this description reference is made to the accompanying drawings, in which:
Figure 1 is a very schematic exploded perspective view of a container;
Figure 2 is an enlarged exploded perspective view of the device for connecting to the container the near end of the sheath intended to feed the wire to the welding machine;
Figure 3 is a perspective view of the same device, but assembled;
Figure 4 is an enlarged representation of the perimeter of said removable region of the container;
Figure 5 is a plan view of the device of Figure 3 from below;
Figure 6 is a vertical section therethrough on the line 6-6 of Figure 5, but with the device fitted into the aperture obtained by removing the removable part of Figure 4, and without the relative sheath and helical spring;
Figure 7 is a vertical section therethrough on the line 7-7 of Figure 5, again without the sheath and the helical spring;
Figure 8 is a plan view from above of the upper plate of the device;
Figure 9 is a side view thereof in the direction of the arrow 9 of Figure 8;
Figure 10 is a plan view from above of the movable plate of the device;
Figure 11 is a plan view from above of the lower plate of the device;
Figure 12 is a side view thereof in the direction of the arrow 12 of Figure 13 shows a detail of an embodiment of the device which is not claimed.

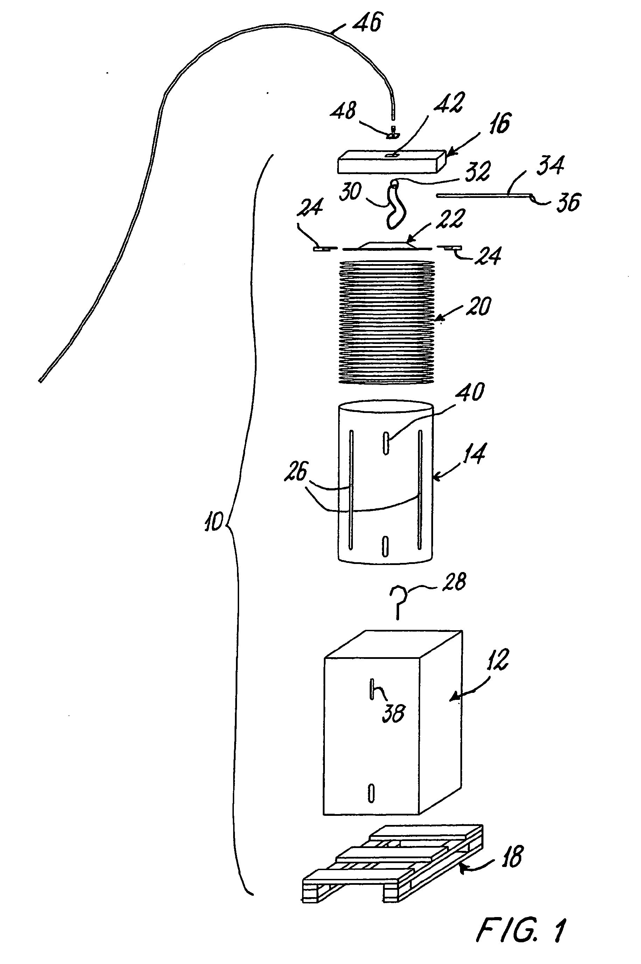

The container 10 shown in Figure 1 is of the type in accordance with the said MI2001A 001694, it consisting in particular of an outer shell 12 and an inner shell 14. The outer shell 12 is in the form of a square based parallelepiped and, in the specific example, is closed lowerly but open upperly, its upper aperture being closable by a square lid 16.

The inner shell 14 is of circular based cylindrical shape, is open at its two ends and is enveloped by the outer shell 12.

In the specific example, the outer shell 12, including the lid 16, and the inner shell 14 are of cardboard. To facilitate container handling, the outer shell is fixed in conventional manner onto a usual pallet 18. The inner shell 14 is simply inserted into the outer shell 12 from above, the inner shell 14 then being able to receive a conventional coil 20 of metal welding wire.

Above the coil 20 there is placed a coil covering element 22 which (as is known to the expert of the art) acts as a "brake" for the wire as it gradually descends into the inner shell 14 as the wire is withdrawn, with consequent decrease in the height of the coil 20. In the specific example the coil covering element 22 is also made of cardboard and is essentially formed from an outer circular ring, from the inner edge of which a frusto-conical wall extends upwards to define a circular central aperture through which the coil wire is intended to pass.

Four substantially rigid horizontal lugs are fixed angularly equidistant to the coil covering element 22 (in Figure 1 only two are represented for simplicity, indicated by 24, and are shown separated from the actual coil covering element). Each of the lugs 24 (conveniently made for example of wood) is intended to be inserted into a relative vertical slot 26 provided in the side wall of the inner shell 14, the lugs 24 and slots 26 enabling the coil covering element 22 to be guided during its descent (as a result of the extraction of the wire) and preventing its simultaneous rotation.

In the container 10 there is provided a hook 28 which, when the container has been made up, projects upwards from the centre of the lower wall of the outer shell 12 and has its lower end fixed to the pallet 18. To the hook 28 there is hooked an elastic band 30 which passes through a ring 32 into which, when the elastic band has been put under tension, a rigid rod 34 provided at one end with a ring 36, is inserted. The rod 34 is simultaneously inserted through two corresponding vertical slots provided in the side wall of the outer shell 12 and, respectively, of the inner shell 14 (and indicated in Figure 1 by 38 and 40), and through two opposing through holes provided in the frusto-conical part of the coil covering element 22. The result is that the coil covering element 22 is maintained securely pressing on the top of the coil 20.

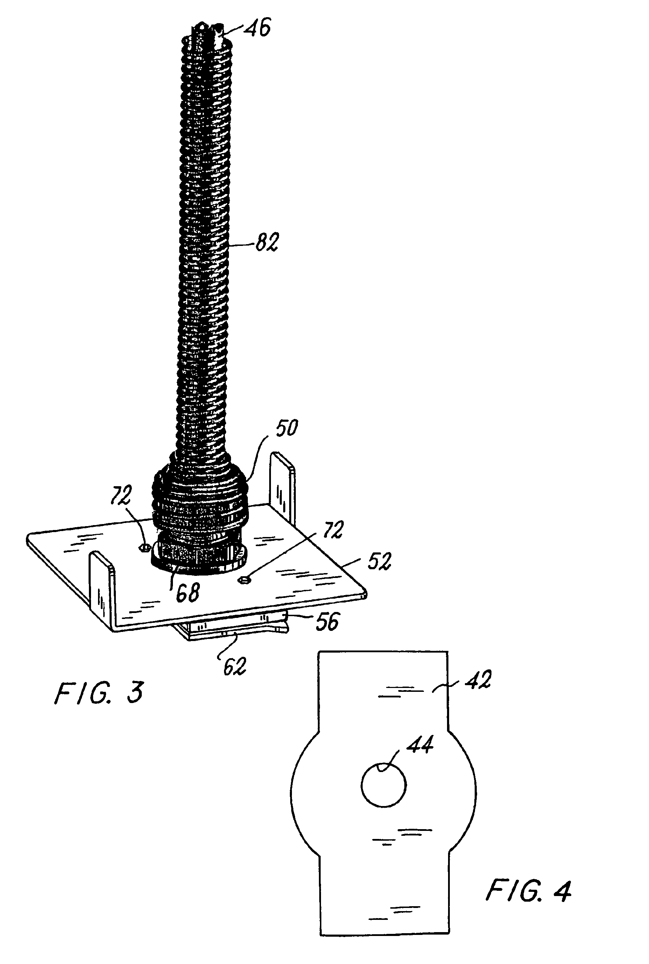

As can be seen from Figure 1, the lid 16 is of the type with downwardly bent edges so that it can be mounted on the top of the outer shell 12, to close it. In the specific example, the lid 16 presents a removable central region 42, the profile of which is shown in Figure 4. In correspondence with this profile there are provided for example non-consecutive cuts which enable the region 42 to be removed from the lid 16, for example by merely pressing, so that a relative aperture (also indicated by 42) remains in the lid. In the removable region 42 there is a through hole 44 through which (before the lid 16 is applied to the outer shell 12) the free upper end of the wire of the coil 20 is passed (after having been previously passed through the central circular aperture of the coil covering element 22). The lid 16 can now be applied to the outer shell 12 so that said wire end projects out of the lid 16 by a length which enables this end to be removably fixed to the outer surface of the lid 16, for example by simple adhesive tape. The container 10 is now ready for storage and/or despatch to the user.

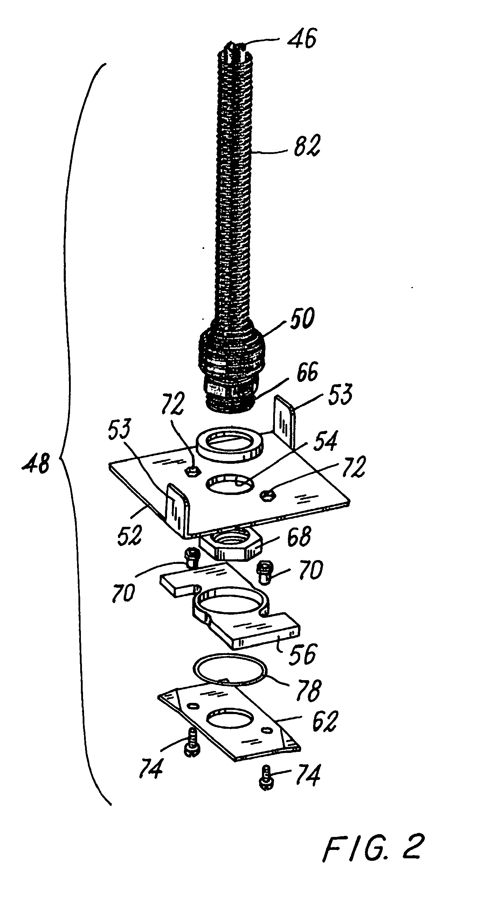

A device can be applied to the aperture which appears on removing the region 42 of the lid 16, to connect this latter to a conventional sheath 46 (Figure 1) used for feeding the wire of the coil 20 to a welding machine (not shown). This device is shown in Figure 2 in the specific example, and is indicated overall by 48.

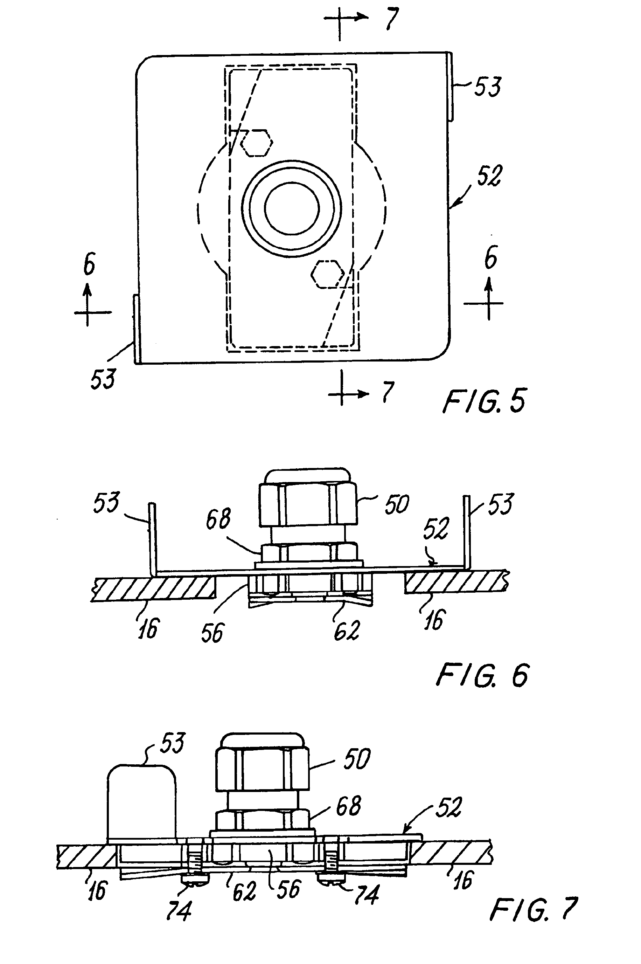

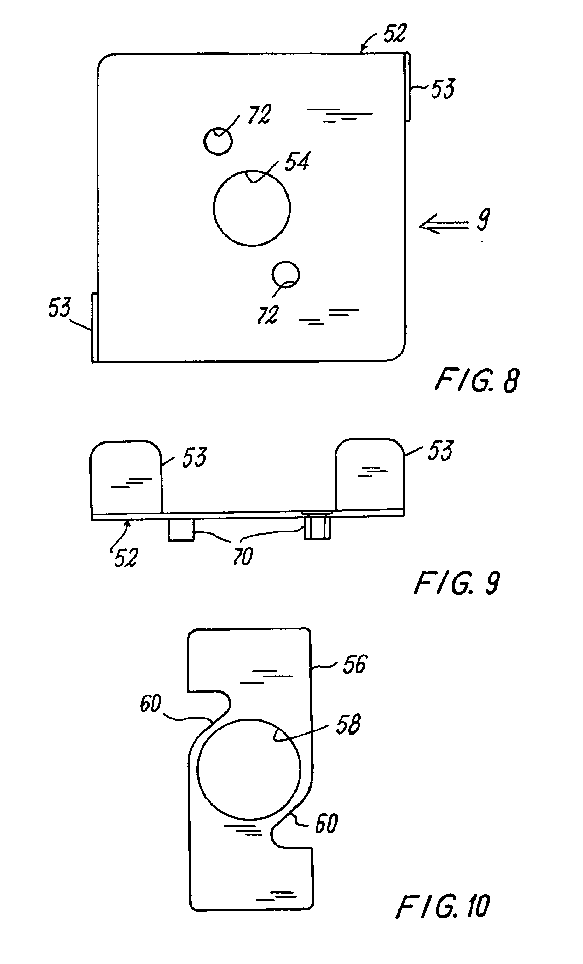

The connection device 48 shown in Figures 2 and 3 comprises a cable clamp 50 (best seen in Figure 6 and 7) connectable to the near end of the sheath 46. The connection device 48 also comprises an outer plate 52 (Figures 8 and 9), intended to lie on the outer surface of the container 10 (on the lid 16 in the specific example) in correspondence with the aperture 42. The plate 52 presents a through hole 54 (Figure 8) through which the end of the wire of the coil 20 emerges. The device 48 also comprises an intermediate plate 56 substantially of the same thickness as the relative wall of the container (in the specific example the thickness of the cardboard lid 16). The intermediate plate 56 also presents a central through hole 58, of diameter greater than that 54 of the outer plate 52, to enable the wire of the coil 20 to pass, the intermediate plate presenting substantially V-shaped respective recesses 60 in its opposing long edges. An inner plate 62 also presents a through central hole 64, of decidedly lesser diameter than the hole 58 and hole 54, but still sufficient to enable the wire of the coil 20 to pass through. The device 48 is provided with a nut 66 and a locking nut 68 for fixing to the outer plate 52 the cable clamp 50, the near end of which is threaded for this purpose, and a pair of internally threaded tubular columns 70 having a head in the form of a nut, previously pressed into a relative aperture 72 provided in the outer plate 52 (but without projecting beyond the outer plane of that plate).

Relative screws 74 inserted through corresponding through holes 76 in the inner plate 62 are screwed into the columns 70, the screws 74 and columns 70 making the outer plate 52 rotatably rigid with the inner plate 62, but without interfering with the intermediate plate 56 by virtue of the presence of the recesses 60 therein.

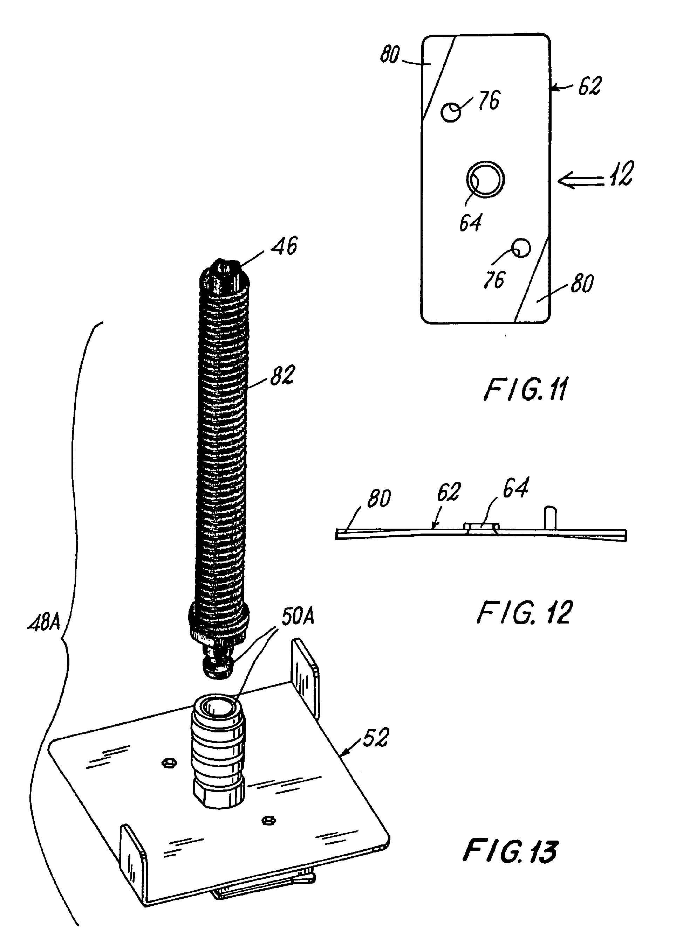

When the device 48 is assembled (Figure 3) the intermediate plate 56 lies within the aperture 42 of the lid 16, hence when the outer plate 52 is rotated (by acting on its vertical lugs 53) the inner plate 62 rotates rigidly therewith, whereas the intermediate plate 56 does not follow this movement and remains at rest. This operation enables the device 48 to be fixed to the lid 16 while still applied to the outer shell 12. To facilitate relative movement in this case between the inner plate 62 and intermediate plate 56, a rubber O-ring 78 is interposed between the two. As can be seen from Figures 11 and 12, the inner plate 62 presents two of its corner portions 80 slightly bent inwards to prevent the plate 62, during the aforesaid rotation manoeuvre, from jamming against the inner face of the lid 16.

To maintain the sheath 46, at least along its initial portion, substantially perpendicular to the relative wall of the container 10 (vertical in the specific example) in order to facilitate exit of the wire of the coil 20 from the container 10, a helical spring 82 is provided, enclosing for this purpose the initial portion of the sheath.

In the specific illustrated example, the connection device 48 is evidently reusable on other containers. This does not however mean that a container cannot be already equipped with the relative connection device if desired.

It is important to note that the container of the present disclosure can also not be of the type in accordance with MI2001A 001694.

It should be noted that in the device for connecting the sheath to the container (in particular to the lid), instead of using the cable clamp 50 and the nuts 66 and 68 to connect the sheath 46 to the outer plate 52 (as in the device 48), a different type of connection means can be used, and in particular a quick connection and release mechanism such as that (48A) shown schematically in Figure 13 (in which the other parts are exactly as in the device 48), or a bayonet connection mechanism.

## Claims

1. Device (48 ; 48A) for connecting to a container (10) containing a coil of welding wire, the near end of a sheath (46) intended to receive the welding wire of the wire coil (20) contained in the container (10), **characterized in that** it comprises:
- a cable clamp (50) connectable to the near end of the sheath (46);
- an outer plate (52) intended to lie on the outer surface of the container (10) in correspondence with an aperture (42) already or subsequently provided in the container (10), the outer plate (52) presenting a through hole (54) through which in use the end of the wire of the coil (20) emerges;
- an intermediate plate (56) substantially of the same thickness as the relative wall (16) of the container (10) and which can be inserted into the aperture (42), the intermediate plate (56) also presenting a through hole (58) for passage of the wire of the coil (20);
- an inner plate (62) suitable to pass through the aperture (42) and having a length greater than the minor size of the aperture (42), the inner plate (62) also presenting a through hole (64) for passage of the wire;
- means (66, 68) for fixing the cable clamp (50) to the outer plate (52);
- and means (70, 74, 76) making the outer plate (52) rotatably rigid with the inner plate (62), but without interfering with the intermediate plate (56).

2. Device (48) as claimed in claim 1, **characterized in that** the means making the outer plate (52) rotatably rigid with the inner plate (62) but without interfering with the intermediate plate (56) comprise at least two internally threaded tubular columns (70) having a head in the form of a nut insertable into relative holes (72) provided in the outer plate (52), relative screws (74) inserted through corresponding through holes (76) provided in the inner plate (62) being screwable into the columns (70).

3. Device (48) as claimed in claim 1, **characterized in that** the means (66, 68) for fixing are fixing nuts (66, 68).

4. Device (48 ; 48A) for connecting to a container (10) containing a coil of welding wire, the near end of a sheath (46) intended to receive the welding wire of the wire coil (20) contained in the container (10), **characterized in that** it comprises:
- a bayonet connection mechanism connectable to the near end of the sheath (46);
- an outer plate (52) intended to lie on the outer surface of the container (10) in correspondence with an aperture (42) already or subsequently provided in the container (10), the outer plate (52) presenting a through hole (54) through which in use the end of the wire of the coil (20) emerges;
- an intermediate plate (56) substantially of the same thickness as the relative wall (16) of the container (10) and which can be inserted into the aperture (42), the intermediate plate (56) also presenting a through hole (58) for passage of the wire of the coil (20);
- an inner plate (62) suitable to pass through the aperture (42) and having a length greater than the minor size of the aperture (42), the inner plate (62) also presenting a through hole (64) for passage of the wire;
- means (66, 68) for fixing the bayonet connection mechanism to the outer plate (52);
- and means (70, 74, 76) making the outer plate (52) rotatably rigid with the inner plate (62), but without interfering with the intermediate plate (56).

5. Device according to any of Claims 1 to 4, **characterized in that** a rubber O-ring (78) is interposed between the inner plate (62) and the intermediate plate (56).

6. Device according to any of Claims 1 to 5, **characterized in that** the inner plate (62) is rectangular and presents two of its corner portions (80) slightly bent inwards to prevent jamming.

7. Device according to any of Claims 1 to 6, **characterized in that** the outer plate (52) presents two outwardly extending lugs (53) to facilitate rotation of the plate (52) when the device is applied to the aperture (42) of the container (10).

8. Device according to any of Claims 1 to 7, **characterized in that**, in order to maintain the sheath (46), at least along its initial portion, substantially perpendicular to the relative wall (16) of the container (10), the connection device (48; 48A) comprises a helical spring (82) which in use encloses the initial portion of the sheath (46).

9. Assembly comprising a container (10) containing a coil of welding wire and a device (48 ; 48A) according to any one of the preceding claims connected or connectable to said container (10).

10. Assembly according to Claim 9, **characterized in that**, in use, the near end of the sheath (46) receives the welding wire of the wire coil (20) contained in the container (10).

11. Assembly according to any of Claims 9 or 10, **characterized in that** the container comprises a hole (44) and a container region (42) around the hole (44) is removable, the connection device (48; 48A) being of the type applicable to the container (10) from the outside by way of the aperture resulting from the removal of the removable region (42).

12. Assembly according to any of Claims 9 to 11, **characterized in that** the container (10) comprises an outer shell (12), an inner shell (14) and a square lid (16), the outer shell (12) being in the form of a lowerly closed and upperly open square based parallelepiped, its upper aperture being closable by said square lid (16), the inner shell (14) being of circular based cylindrical shape, is open at its two ends and is enveloped by the outer shell (12).

13. Assembly according to Claim 12, **characterized in that** the inner shell (14), the outer shell (12) and the lid (16) of the container (10) are of cardboard.

14. Assembly according to any of Claims 12 or 13, **characterized in that** the outer shell (12) of the container (10) is fixed onto a pallet (18) to facilitate container handling.

15. Assembly according to any of Claims 12 to 14, **characterized in that** a coil covering element (22) acting as a brake for the wire is disposed on the coil (20) enclosed in the inner shell (14) of the container (10), the coil covering element (22) gradually descending within the inner shell (14) as the wire is withdrawn, so reducing the height of the coil (20).

16. Assembly according to Claim 15, **characterized in that** the coil covering element (22) is of cardboard and comprises an outer circular ring, from the inner edge of which there extends concentrically upwards a frusto-conical wall which delimits the circular central aperture through which the wire is intended to pass.

17. Assembly according to Claim 16, **characterized in that** the coil covering element (22) also comprises angularly equidistant substantially rigid horizontal lugs (24), each lug (24) being intended to be inserted through a relative vertical slot (26) provided in the side wall of the inner shell (14).

18. Assembly according to any of Claims 12 to 17, **characterized in that** a hook (28) is provided in the container (10) which, when the container (10) has been made up, projects upwards from the centre of the lower wall of the outer shell (12), to the hook (28) there being hooked an elastic band (30) passing through a ring (32) through which, after the elastic band (30) has been put under tension, a rigid rod (34) provided at one end with a ring (36) can be inserted, the rod (34) being insertable through two corresponding vertical slots (38, 40) provided in the side wall of the outer shell (12) and, respectively, of the inner shell (14), and through two opposing through holes provided in the coil covering element 22, and finally through a further two corresponding vertical slots provided in the other side of the inner shell (14) and outer shell (12).

19. Assembly according to Claim 13, **characterized in that** the lid (16) is of the type having its edges folded downwards to enable it to be mounted over the top of the outer shell (12).

20. Assembly according to Claims 11 and 12, **characterized in that** the removable region (42) of the container (10) forms part of the lid (12).

## Patentansprüche

1. Vorrichtung (48; 48A) zum Verbinden, mit einem eine Spule von Schweißdraht enthaltenden Behälter (10), des nahen Endes einer zum Aufnehmen des Schweißdrahts der in dem Behälter (10) enthaltenen Drahtspule (20) bestimmten Hülse (46), **dadurch gekennzeichnet, dass** sie Folgendes umfasst:
- eine Kabelklemme (50), die mit dem nahen Ende der Hülse (46) verbindbar ist;
- eine äußere Platte (52), die dazu bestimmt ist, in Übereinstimmung mit einer bereits oder anschließend in dem Behälter (10) vorgesehenen Öffnung (42) auf der äußeren Oberfläche des Behälters (10) zu liegen, wobei die äußere Platte (52) ein Durchgangsloch (54) darbietet, durch das in Gebrauch das Ende des Drahts der Spule (20) hervortritt;
- eine Zwischenplatte (56) mit im Wesentlichen der selben Dicke wie die jeweilige Wand (16) des Behälters (10) und die in die Öffnung (42) eingeführt werden kann, wobei die Zwischenplatte (56) ebenfalls ein Durchgangsloch (58) zum Hindurchgelangen des Drahts der Spule (20) darbietet;
- eine innere Platte (62), die dazu geeignet ist, durch die Öffnung (42) hindurchzugelangen und eine Länge aufweist, die größer ist als die kleinere Größe der Öffnung (42), wobei die innere Platte (62) ebenfalls ein Durchgangsloch (64) zum Hindurchgelangen des Drahts darbietet;
- Mittel (66, 68) zum Befestigen der Kabelklemme (50) an der äußeren Platte (52);
- und Mittel (70, 74, 76), die die äußere Platte (52) mit der inneren Platte (62) rotationssteif machen, aber ohne die Zwischenplatte (56) zu beeinflussen.

2. Vorrichtung (48) nach Anspruch 1, **dadurch gekennzeichnet, dass** die Mittel, die die äußere Platte (52) mit der inneren Platte (62) rotationssteif machen, aber ohne die Zwischenplatte (56) zu beeinflussen, mindestens zwei mit Innengewinde versehene röhrenförmige Pfosten (70) umfassen, mit einem Kopf in Form einer in jeweilige, in der äußeren Platte (52) vorgesehene Löcher (72) einführbaren Mutter, wobei jeweilige Schrauben (74), die durch entsprechende, in der inneren Platte (62) vorgesehene Durchgangslöcher (76) eingeführt werden, in die Pfosten (70) schraubbar sind.

3. Vorrichtung (48) nach Anspruch 1, **dadurch gekennzeichnet, dass** es sich bei den Mitteln (66, 68) zum Befestigen um Befestigungsmuttern (66, 68) handelt.

4. Vorrichtung (48; 48A) zum Verbinden, mit einem eine Spule von Schweißdraht enthaltenden Behälter (10), des nahen Endes einer zum Aufnehmen des Schweißdrahts der in dem Behälter (10) enthaltenen Drahtspule (20) vorgesehenen Hülse (46), **dadurch gekennzeichnet, dass** sie Folgendes umfasst:
- einen Bajonettverbindungsmechanismus, der mit dem nahen Ende der Hülse (46) verbindbar ist;
- eine äußere Platte (52), die dazu bestimmt ist, in Übereinstimmung mit einer bereits oder anschließend in dem Behälter (10) vorgesehenen Öffnung (42) auf der äußeren Oberfläche des Behälters (10) zu liegen, wobei die äußere Platte (52) ein Durchgangsloch (54) darbietet, durch das in Gebrauch das Ende des Drahts der Spule (20) hervortritt;
- eine Zwischenplatte (56) mit im Wesentlichen der selben Dicke wie die relative Wand (16) des Behälters (10) und die in die Öffnung (42) eingeführt werden kann, wobei die Zwischenplatte (56) ebenfalls ein Durchgangsloch (58) für das Hindurchgelangen des Drahts der Spule (20) darbietet;
- eine innere Platte (62), die dazu geeignet ist, durch die Öffnung (42) hindurchzugelangen und eine Länge aufweist, die größer ist als die kleinere Größe der Öffnung (42), wobei die innere Platte (62) ebenfalls ein Durchgangsloch (64) zum Hindurchgelangen des Drahts darbietet;
- Mittel (66, 68) zum Befestigen des Bajonettverbindungsmechanismus an der äußeren Platte (52);
- und Mittel (70, 74, 76), die die äußere Platte (52) mit der inneren Platte (62) rotationssteif machen, aber ohne die Zwischenplatte (56) zu beeinflussen.

5. Vorrichtung nach einem der Ansprüche 1 bis 4, **dadurch gekennzeichnet**, das ein Gummi-O-Ring (78) zwischen der inneren Platte (62) und der Zwischenplatte (56) angeordnet ist.

6. Vorrichtung nach einem der Ansprüche 1 bis 5, **dadurch gekennzeichnet, dass** die innere Platte (62) rechteckig ist und zwei ihrer Eckabschnitte (80) leicht nach innen gebogen darbietet, um Verklemmen zu verhindern.

7. Vorrichtung nach einem der Ansprüche 1 bis 6, **dadurch gekennzeichnet, dass** die äußere Platte (52) zwei sich nach außen erstreckende Laschen (53) darbietet, um die Drehung der Platte (52) zu ermöglichen, wenn die Vorrichtung auf die Öffnung (42) des Behälters (10) aufgebracht wird.

8. Vorrichtung nach einem der Ansprüche 1 bis 7, **dadurch gekennzeichnet, dass**, um die Hülse (46) wenigstens entlang ihres Anfangsabschnitts im Wesentlichen senkrecht zu der jeweiligen Wand (16) des Behälters (10) zu halten, die Verbindungsvorrichtung (48; 48A) eine Spiralfeder (82) umfasst, die in Gebrauch den Anfangsabschnitt der Hülse (46) umschließt.

9. Baugruppe, umfassend einen eine Spule von Schweißdraht enthaltenden Behälter (10) und eine Vorrichtung (48; 48A) nach einem der vorangehenden Ansprüche, die mit dem genannten Behälter (10) verbunden oder verbindbar ist.

10. Baugruppe nach Anspruch 9, **dadurch gekennzeichnet, dass** in Gebrauch das nahe Ende der Hülse (46) den Schweißdraht der in dem Behälter (10) enthaltenden Drahtspule (20) aufnimmt.

11. Baugruppe nach einem der Ansprüche 9 oder 10, **dadurch gekennzeichnet, dass** der Behälter ein Loch (44) umfasst und ein Behälterbereich (42) um das Loch (44) entfernbar ist, wobei die Verbindungsvorrichtung (48; 48A) der Art ist, die von außen mittels der aus dem Entfernen des entfernbaren Bereichs (42) resultierenden Öffnung auf den Behälter (10) aufbringbar ist.

12. Baugruppe nach einem der Ansprüche 9 bis 11, **dadurch gekennzeichnet, dass** der Behälter (10) eine äußere Hülle (12), eine innere Hülle (14) und einen quadratischen Deckel (16) umfasst, wobei die äußere Hülle (12) die Form eines unten geschlossenen und oben offenen Parallelepipeds mit quadratischem Boden aufweist, wobei dessen obere Öffnung durch den genannten quadratischen Deckel (16) verschließbar ist, wobei die innere Hülle (14) eine zylindrische Form mit kreisförmigem Boden aufweist, an ihren zwei Enden offen ist und von der äußeren Hülle (12) umhüllt ist.

13. Baugruppe nach Anspruch 12, **dadurch gekennzeichnet, dass** die innere Hülle (14), die äußere Hülle (12) und der Deckel (16) des Behälters (10) aus Karton sind.

14. Baugruppe nach einem der Ansprüche 12 oder 13, **dadurch gekennzeichnet, dass** die äußere Hülle (12) des Behälters (10) auf einer Palette (18) befestigt ist, um den Transport des Behälters zu ermöglichen.

15. Baugruppe nach einem der Ansprüche 12 bis 14, **dadurch gekennzeichnet, dass** ein als Bremse für den Draht wirkendes Spulenabdeckungselement (22) auf der in der inneren Hülle (14) des Behälters (10) eingeschlossenen Spule (20) angeordnet ist, wobei das Spulenabdeckungselement (22) sich allmählich in der inneren Hülle (14) abwärts bewegt, wenn der Draht herausgezogen wird, wodurch die Höhe der Spule (20) verringert wird.

16. Baugruppe nach Anspruch 15, **dadurch gekennzeichnet, dass** das Spulenabdeckungselement (22) aus Karton ist und einen äußeren Kreisring umfasst, von dessen Innenrand sich eine kegelstumpfförmige Wand konzentrisch nach oben erstreckt, die die kreisförmige mittlere Öffnung begrenzt, durch die der Draht hindurchgelangen soll.

17. Baugruppe nach Anspruch 16, **dadurch gekennzeichnet, dass** das Spulenabdeckungselement (22) außerdem in gleichen Winkelabständen angeordnete, im Wesentlichen starre horizontale Laschen (24) umfasst, wobei die Laschen (24) jeweils dazu bestimmt sind, durch einen jeweiligen vertikalen Schlitz (26) gesteckt zu werden, der in der Seitenwand der inneren Hülle (14) vorgesehen ist.

18. Baugruppe nach einem der Ansprüche 12 bis 17, **dadurch gekennzeichnet, dass** ein Haken (28) in dem Behälter (10) vorgesehen ist, der, wenn der Behälter (10) fertiggestellt wurde, von der Mitte der unteren Wand der äußeren Hülle (12) nach oben ragt, wobei ein Gummiband (30) in den Haken (28) eingehakt ist, das durch einen Ring (32) verläuft, durch den eine an einem Ende mit einem Ring (36) versehene starre Stange (34) gesteckt werden kann, nachdem das Gummiband (30) unter Spannung gesetzt wurde, wobei die Stange (34) durch zwei in der Seitenwand der äußeren Hülle (12) bzw. der inneren Hülle (14) vorgesehene, einander entsprechende vertikale Schlitze (38, 40) und durch zwei in dem Spulenabdeckungselement 22 vorgesehene, gegenüberliegende Durchgangslöcher und schließlich durch zwei weitere, in der anderen Seite der inneren Hülle (14) und der äußeren Hülle (12) vorgesehene, einander entsprechende vertikale Schlitze steckbar ist.

19. Baugruppe nach Anspruch 13, **dadurch gekennzeichnet, dass** der Deckel (16) der Art ist, deren Ränder nach unten gefaltet sind, damit er über die Oberseite der äußeren Hülle (12) angebracht werden kann.

20. Baugruppe nach Ansprüchen 11 und 12, **dadurch gekennzeichnet, dass** der entfernbare Bereich (42) des Behälters (10) einen Teil des Deckels (12) bildet.

## Revendications

1. Dispositif (48 ; 48a) pour raccorder à un récipient (10) contenant une bobine de fil à souder, l'extrémité proche d'une gaine (46) destinée à recevoir le fil à souder de la bobine de fil (20) contenue dans le récipient (10), **caractérisé en ce qu'**il comprend :
- un serre-câble (50) qui peut être connecté à l'extrémité proche de la gaine (46) ;
- une plaque externe (52) destinée à reposer sur la surface externe du récipient (10) en correspondance avec une ouverture (42) déjà formée ou formée par la suite dans le récipient (10), la plaque externe (52) présentant un trou traversant (54) à travers lequel, en service, l'extrémité du fil métallique de la bobine (20) émerge ;
- une plaque intermédiaire (56) sensiblement de la même épaisseur que la paroi relative (16) du récipient (10) et qui peut être insérée dans l'ouverture (42), la plaque intermédiaire (56) présentant également un trou traversant (58) pour le passage du fil métallique de la bobine (20) ;
- une plaque interne (62) convenant pour passer à travers l'ouverture (42) et ayant une longueur supérieure à la taille mineure d e l'ouverture (42), la plaque interne (62) présentant également un trou traversant (64) pour le passage du fil métallique ;
- des moyens (66, 68) pour fixer le serre-câble (50) à la plaque externe (52) ; et
- des moyens (70, 74, 76) rendant la plaque externe (52) rigide à la rotation avec la plaque interne (62), mais sans interférer avec la plaque intermédiaire (56).

2. Dispositif (48) selon la revendication 1, **caractérisé en ce que** les moyens rendant la plaque externe (52) rigide à la rotation avec la plaque interne (62), mais sans interférer avec la plaque intermédiaire (56), comprennent au moins deux colonnes tubulaires (70) taraudées ayant une tête sous la forme d'un écrou qui peut être inséré dans des trous relatifs (72) ménagés dans la plaque externe (52), des vis relatives (74) insérées à travers des trous traversants correspondants (76) ménagés dans la plaque interne (62) et qui peuvent se visser dans les colonnes (70).

3. Dispositif (48) selon la revendication 1, **caractérisé en ce que** les moyens (66, 68) pour la fixation sont des écrous de fixation (66, 68).

4. Dispositif (48 ; 48A) pour raccorder à un récipient (10) contenant une bobine de fil à souder, l'extrémité proche d'une gaine (46) destinée à recevoir le fil à souder de la bobine de fil (20) contenue dans le récipient (10), **caractérisé en ce qu'**il comprend :
- un mécanisme de raccordement à baïonnette qui peut être raccordé à l'extrémité proche de la gaine (46) ;
- une plaque externe (52) destinée à reposer sur la surface externe du récipient (10) en correspondance avec une ouverture (42) déjà formée ou formée par la suite dans le récipient (10), la plaque externe (52) présentant un trou traversant (54) à travers lequel, en service, l'extrémité du fil métallique de la bobine (20) émerge ;
- une plaque intermédiaire (56) sensiblement de la même épaisseur que la paroi relative (16) du récipient (10) et qui peut être insérée dans l'ouverture (42), la plaque intermédiaire (56) présentant également un trou traversant (58) pour le passage du fil métallique de la bobine (20) ;
- une plaque interne (62) convenant pour passer à travers l'ouverture (42) et ayant une longueur supérieure à la taille mineure d e l'ouverture (42), la plaque interne (62) présentant également un trou traversant (64) pour le passage du fil métallique ;
- des moyens (66, 68) pour fixer le mécanisme de raccordement à baïonnette à la plaque externe (52) ; et
- des moyens (70, 74, 76) rendant la plaque externe (52) rigide à la rotation avec la plaque interne (62), mais sans interférer avec la plaque intermédiaire (56).

5. Dispositif selon l'une quelconque des revendications 1 à 4, **caractérisé en ce qu'**un joint torique en caoutchouc (78) est intercalé entre la plaque interne (62) et la plaque intermédiaire (56).

6. Dispositif selon l'une quelconque des revendications 1 à 5, **caractérisé en ce que** la plaque interne (62) est rectangulaire et présente deux de ses parties cornières (80) qui sont légèrement ployées vers l'intérieur pour empêcher un coincement.

7. Dispositif selon l'une quelconque des revendications 1 à 6, **caractérisé en ce que** la plaque externe (52) présente deux ressauts (53) s'étendant vers l'extérieur pour faciliter la rotation de la plaque (52) lorsque le dispositif est appliqué à l'ouverture (42) du récipient (10).

8. Dispositif selon l'une quelconque des revendications 1 à 7, **caractérisé en ce que**, pour maintenir la gaine (46), au moins sur sa partie initiale, sensiblement perpendiculaire à la paroi relative (16) du récipient (10), le dispositif de raccordement (48 ; 48A) comprend un ressort à boudin (82) qui enserre la partie initiale de la gaine (46) en service.

9. Ensemble comprenant un récipient (10) contenant une bobine de fil à souder et un dispositif (48 ; 48A) selon l'une quelconque des revendications précédentes, qui est raccordé ou peut être raccordé audit récipient (10).

10. Ensemble selon la revendication 9, **caractérisé en ce que**, en service, l'extrémité proche de la gaine (46) reçoit le fil à souder de la bobine de fil (20) contenue dans le récipient (10).

11. Ensemble selon l'une quelconque des revendications 9 ou 10, **caractérisé en ce que** le récipient comprend un trou (44) et une région (42) du récipient autour du trou (44) est enlevable, le dispositif de raccordement (48 ; 48A) étant du type applicable au récipient (10) de l'extérieur au moyen de l'ouverture résultant de l'élimination de la région enlevable (42).

12. Ensemble selon l'une quelconque des revendications 9 à 11, **caractérisé en ce que** le récipient (10) comprend une coque externe (12), une coque interne (14) et un couvercle carré (16), la coque externe (12) se présentant sous la forme d'un parallélépipède à base carrée fermé dans sa partie inférieure et ouvert dans sa partie supérieure, son ouverture supérieure pouvant être fermée par ledit couvercle carré (16), la coque interne (14) étant de forme cylindrique à base circulaire, qui est ouverte à ses deux extrémités et est enserrée par la coque externe (12).

13. Ensemble selon la revendication 12, **caractérisé en ce que** la coque interne (14), la coque externe (12) et le couvercle (16) du récipient (10) sont en carton.

14. Ensemble selon l'une quelconque des revendications 12 ou 13, **caractérisé en ce que** la coque externe (12) du récipient (10) est fixée sur une palette (18) pour faciliter la manipulation du récipient.

15. Ensemble selon l'une quelconque des revendications 12 à 14, **caractérisé en ce qu'**un élément (22) recouvrant la bobine et agissant comme un frein pour le fil métallique est disposé sur la bobine (20) enserrée dans la coque interne (14) du récipient (10), l'élément (22) recouvrant la bobine descendant graduellement dans la coque interne (14) à mesure que le fil métallique est retiré, réduisant de la sorte la hauteur de la bobine (20).

16. Ensemble selon la revendication 15, **caractérisé en ce que** l'élément (22) recouvrant la bobine est du carton et comprend un anneau circulaire externe, à partir du bord interne duquel s'étend concentriquement vers le haut une paroi tronconique qui délimite l'ouverture circulaire centrale à travers laquelle le fil métallique est destiné à passer.

17. Ensemble selon la revendication 16, **caractérisé en ce que** l'élément (22) recouvrant la bobine comprend également des ressauts horizontaux sensiblement rigides (24) équidistants au plan angulaire, chaque ressaut (24) étant destiné à être inséré à travers une fente verticale relative (26) ménagée dans la paroi latérale de la coque externe (14).

18. Ensemble selon l'une quelconque des revendications 12 à 17, **caractérisé en ce qu'**un crochet (28) est prévu dans le récipient (10), lequel crochet, lorsque le récipient (10) a été constitué, fait saillie vers le haut depuis le centre de la paroi inférieure de la coque externe (12), le crochet (28) étant tel qu'y soit accrochée une bande élastique (30) passant à travers un anneau (32) par lequel, une fois que la bande élastique (30) a été placée sous tension, une tige rigide (34) prévue à une première extrémité avec un anneau (36) peut être insérée, la tige (34) pouvant être insérée à travers deux fentes verticales correspondantes (38, 40) ménagées dans la paroi latérale de la coque externe (12) et, respectivement, de la coque interne (14), et à travers deux trous traversants opposés ménagés dans l'élément (22) recouvrant la bobine et finalement à travers deux autres fentes verticales correspondantes ménagées dans l'autre côté de la coque interne (14) et de la coque externe (12).

19. Ensemble selon la revendication (13), **caractérisé en ce que** le couvercle (16) est du type ayant ses bords repliés vers le bas pour lui permettre d'être monté sur la partie supérieure de la coque externe (12).

20. Ensemble selon les revendications 11 et 12, **caractérisé en ce que** la région enlevable (42) du récipient (10) fait partie du couvercle (12).
